# FASCICULE DE BREVET EUROPEEN

(11) **EP 3 489 788 B1**
(45) Date de publication et mention de la délivrance du brevet: **18.12.2019**
(21) Numéro de dépôt: 18198531.8
(22) Date de dépôt: 04.10.2018
(51) Int. Cl.: G05D 1/10, B64D 45/00, G01C 23/00, G06F 3/00, B64C 13/18, B64C 27/57, B64D 43/00, G06F 3/0362, G06F 3/0484, G06F 3/0488

(54) **PROCÉDÉ DE COMMANDE D'UN PILOTE AUTOMATIQUE D'AÉRONEF, SYSTÈME DE COMMANDE ASSOCIÉ ET AÉRONEF ÉQUIPÉ D'UN TEL SYSTÈME DE COMMANDE**
STEUERUNGSVERFAHREN EINES AUTOPILOTEN EINES LUFTFAHRZEUGS, ENTSPRECHENDES STEUERUNGSSYSTEM UND MIT EINEM SOLCHEN STEUERUNGSSYSTEM AUSGERÜSTETES LUFTFAHRZEUG
METHOD FOR CONTROLLING AN AIRCRAFT AUTOMATIC PILOT, ASSOCIATED CONTROL SYSTEM AND AIRCRAFT PROVIDED WITH SUCH A CONTROL SYSTEM

(30) Priorité: 28.11.2017 FR 1771271
(43) Date de publication de la demande: 29.05.2019
(73) Titulaire: Airbus Helicopters, 13725 Marignane Cedex (FR)
(72) Inventeur: TARAVELLA, Gautier, 13410 Lambesc (FR)
(74) Mandataire: GPI & Associés

(56) Documents cités:
- WO-A1-2016/035002
- FR-A1- 3 050 026
- US-B1- 8 159 464

## Description

La présente invention se rapporte au domaine du pilotage automatique d'aéronefs tels que notamment des avions ou des giravions.

L'invention vise plus précisément un procédé et un système de commande d'un pilote automatique permettant à au moins un pilote, ou au moins une personne de l'équipage d'un aéronef, de donner des consignes de commande à un ou plusieurs équipement(s) apte(s) à réaliser une fonction de pilotage automatique. De tels équipements permettent ainsi d'asservir le vol de l'aéronef selon les consignes sélectionnées par le(s) pilote(s) de l'aéronef.

En outre, un pilote automatique d'aéronef peut être considéré comme un système de commande pour asservir la vitesse de déplacement et/ou la trajectoire d'un aéronef à une valeur de consigne prédéterminée et sélectionnée par le(s) pilote(s). Une telle consigne désigne à la fois le type de paramètre de vol qui est asservi et la valeur prédéterminée à atteindre puis à maintenir pendant une période de temps prédéterminée ou encore indéterminée jusqu'à l'arrêt du mode de pilotage automatique.

Ainsi, durant la période pendant laquelle le mode de pilotage automatique est enclenché, la charge de travail du (ou des) pilote(s) est allégée et il(s) peu(ven)t alors concentrer son (leur) attention à d'autres tâches que le pilotage de l'aéronef ou encore limiter partiellement le nombre de paramètres de vol pour piloter semi automatiquement l'aéronef.

De façon connue et tel que décrit par le document FR 3 050 026, la saisie du (ou des) paramètre(s) de vol à asservir par le pilote automatique est réalisée au moyen d'un panneau de commande dédié muni d'une pluralité d'interrupteurs, d'une pluralité d'organes de commande à actionnement rotatif, de boutons poussoirs ou de voyants. Un tel panneau de commande dédié est généralement agencé de manière centrale à l'intérieur d'un cockpit pour permettre l'actionnement des organes de commande par les différents membres de l'équipage aptes à piloter l'aéronef.

Par ailleurs, la pluralité d'interrupteurs présents sur le panneau de commande dédié permet généralement de sélectionner un paramètre de vol du pilote automatique. Chaque interrupteur a permet donc de sélectionner un paramètre de vol puis un organe de commande annexe permet de modifier ce paramètre de vol.

Un tel paramètre de vol sélectionné du pilote automatique peut notamment permettre à l'aéronef de rejoindre ou de suivre automatiquement un cap ou une route prédéterminé, de suivre automatiquement une consigne de descente en pente ou verticale dans le cas d'un giravion, de se maintenir automatiquement à une vitesse prédéterminée par rapport à la masse d'air environnante ou par rapport au sol, de se maintenir automatiquement à une altitude courante ou de rejoindre automatiquement une altitude prédéterminée et de se maintenir automatiquement à une hauteur par rapport au sol prédéterminée. De plus, dans le cas particulier où cet aéronef est formé par un giravion, un tel paramètre de vol sélectionné du pilote automatique peut notamment permettre au giravion de se maintenir automatiquement en vol stationnaire par rapport au sol.

Par suite, les panneaux de commande du pilote automatique comportent autant d'interrupteurs qu'il y a de paramètres de vol à sélectionner et d'afficheurs formés par des écrans et/ou de voyants permettant au(x) pilote(s) de visualiser le mode engagé du pilote automatique en fonction d'un ou des paramètre(s) de vol sélectionné(s).

En outre, en complément des panneaux de commande du pilote automatique, les aéronefs comportent également des écrans permettant au(x (pilote(s) de visualiser la situation courante de vol dans l'environnement extérieur comme par exemple l'inclinaison par rapport à une direction horizontale, le cap suivi, l'altitude et la vitesse suivant trois directions.

Ces écrans sont ainsi utilisés par le(s) pilote(s) pour piloter manuellement les aéronefs mais également pour surveiller certaines informations du pilote automatique. En effet, les consignes du système de pilotage automatique peuvent y être affichées en superposition avec les informations relatives à la situation courante de vol de l'aéronef, et en général sur les éléments affichant la mesure courante du paramètre contrôlé comme par exemple l'altimètre ou l'indicateur de vitesse. L'activation des modes de pilotage automatique est également affichée sur ces écrans disjoints du panneau de commande du pilote automatique.

Au surplus, les panneaux de commande du pilote automatique peuvent également être associés à des écrans présentant une dalle tactile permettant de réaliser les mêmes actions que celles effectuées avec le panneau de commande du pilote automatique. Cette association permet alors de fournir une solution de redondance pour commander le pilote automatique. Une telle association indépendante de la commande du pilote automatique a notamment été divulguée par les documents US 8 159 464.et US 9 710 145.

Cependant, cette association n'est pas optimale et oblige le pilote à utiliser l'un ou l'autre de ces moyens de commande du pilote automatique. En outre, l'utilisation d'un panneau de commande implique une masse importante liée d'une part à la pluralité d'interrupteurs présents sur le panneau de commande et d'autre part surtout au câblage nécessaire pour relier l'ensemble de ces interrupteurs avec une unité de contrôle du pilote automatique.

De plus, un tel panneau de commande et un tel écran tactile doivent être positionnés de façon à être accessibles par les différents pilotes de l'aéronef. Une telle contrainte engendre alors des contraintes pour l'ensemble de l'ergonomie des commandes présentes dans le cockpit de l'aéronef. Par suite, un agencement en position centrale de ces deux organes de commande engendre alors intrinsèquement des temps de manipulation importants pour chaque pilote qui doit alors tendre le bras pour atteindre soit le panneau de commande, soit l'écran tactile.

En outre, il est immédiat que dans le cas où un cockpit comporterait autant de panneaux de commande que de pilotes, la masse supplémentaire produite par un tel ajout en serait multipliée d'autant.

La présente invention a alors pour objet de proposer un procédé de commande et un système de commande associé permettant de s'affranchir des limitations mentionnées ci-dessus. Un tel procédé de commande est enfin avantageux en ce qu'il permet de limiter le nombre d'interrupteurs nécessaires pour d'une part sélectionner un paramètre de vol à asservir par le pilote automatique et d'autre part modifier une consigne du paramètre de vol à asservir par le pilote automatique.

L'invention permet en outre de réduire la masse générée par les moyens de commande du pilote automatique d'un aéronef.

Ainsi, l'invention se rapporte à un procédé de commande d'un pilote automatique d'aéronef, un tel procédé comportant une succession d'étapes comportant au moins :
- une étape de sélection pour sélectionner un paramètre de vol à asservir par le pilote automatique,
- une étape de modification pour modifier une consigne du paramètre de vol à asservir par le pilote automatique, l'étape de modification étant réalisée par le (ou les) pilote(s) de l'aéronef en faisant tourner un premier organe de commande manuelle à actionnement rotationnel, le premier organe de commande comportant un degré de mobilité en rotation par rapport à un châssis fixe autour d'un axe de rotation, et
- une étape d'engagement de mode pour engager le pilote automatique dans un mode correspondant à la consigne modifiée à l'étape de modification du paramètre de vol, l'étape d'engagement de mode étant réalisée par le (ou les) pilote(s) de l'aéronef en appuyant sur un deuxième organe de commande manuelle à actionnement translationnel, le deuxième organe de commande présentant un degré de mobilité en translation par rapport au châssis fixe suivant un axe de translation entre une position initiale de repos et une position actionnée d'engagement,.

Selon l'invention, un tel procédé est remarquable en ce que l'étape de sélection est au moins réalisée par au moins un pilote de l'aéronef en touchant une zone tactile agencée sur une surface tactile d'un écran de contrôle réalisant un affichage d'au moins deux paramètres de vol de l'aéronef, en ce que l'étape de modification est réalisée au moyen du premier organe de commande agencé à proximité immédiate de l'écran de contrôle en faisant tourner le premier organe de commande par rapport au châssis fixe autour de l'axe de rotation agencé perpendiculairement par rapport à l'écran de contrôle et en ce que l'étape d'engagement de mode est réalisée en appuyant sur le deuxième organe de commande coopérant avec des moyens de rappel élastique permettant au deuxième organe de commande de revenir dans la position initiale de repos une fois l'appui relâché par le (ou les) pilote(s) de l'aéronef.

Autrement dit, l'utilisation de la zone tactile agencée sur une surface tactile d'un écran de contrôle est réalisée préalablement à la manipulation du premier organe de commande manuelle à actionnement rotationnel et bien entendu préalablement à l'appui sur le deuxième organe de commande manuelle à actionnement translationnel. Les trois moyens de commande actionnés sélectivement l'un après l'autre sont ainsi dépendants l'un de l'autre. Ils ne permettent donc pas de réaliser une redondance de la commande d'un pilote automatique.

Cependant, l'utilisation d'une zone tactile agencée sur la surface tactile de l'écran de contrôle est avantageuse en ce qu'elle permet d'une part de remplacer tout ou partie des différents interrupteurs qui sont présents sur les panneaux de commande pour sélectionner les paramètres de vol à asservir par le pilote automatique et d'autre part de supprimer le câblage correspondant.

En outre, l'écran de contrôle permet d'afficher simultanément plusieurs paramètres de vol distincts de l'aéronef et ainsi de limiter le nombre d'organes de commande nécessaires pour sélectionner le mode du pilote automatique que le pilote de l'aéronef souhaite engager.

En outre, lors de l'étape de modification de la consigne du paramètre de vol à asservir par le pilote automatique une fenêtre et/ou un indice représentatif(s) d'une valeur de consigne peu(ven)t être affiché(s) en superposition sur l'écran de contrôle comportant la zone tactile. De cette manière, le pilote de l'aéronef peut visualiser directement et instantanément sur cet écran de contrôle la valeur instantanée de la consigne qu'il modifie à l'aide du premier organe de commande comportant un degré de mobilité en rotation.

Par ailleurs, suite à l'étape de modification de la consigne du paramètre de vol à asservir si l'étape d'engagement de mode n'est pas mise œuvre dans un délai prédéterminé, la fenêtre et/ou l'indice représentatif(s) d'une valeur de consigne peu(ven)t être masqué(s) automatiquement.

Avantageusement, l'étape de sélection pour sélectionner un paramètre de vol à asservir par le pilote automatique peut être réalisée par au moins un pilote de l'aéronef en touchant la zone tactile agencée sur la surface tactile et indépendamment en actionnant un dispositif de commande de pointeur pour déplacer un pointeur sur l'écran de contrôle, le dispositif de commande de pointeur étant disjoint de l'écran de contrôle.

En d'autres termes, l'étape de sélection du paramètre de vol peut être à la fois effectuée par le(s) pilote(s) soit un touchant la zone tactile de l'écran de contrôle, soit en actionnant le dispositif de commande de pointeur directement accessible par le(s) pilote(s) et disjoint de l'écran de contrôle. Un tel dispositif de commande de pointeur peut notamment être actionné par la paume de la main d'un pilote et est alors désigné en langue anglaise par le terme de « trackball » ou peut également être actionné par au moins un doigt de la main d'un pilote en étant par exemple formé par un pavé tactile, un pad ou un « chapeau chinois multidirectionnel » directement agencé sur un mini-manche de commande permettant au(x) pilote(s) de piloter l'aéronef pour effectuer notamment des mouvements de tangage ou pour avancer ou reculer dans le cas d'un mini-manche de commande du pas cyclique des pales d'un rotor de giravion.

En pratique, l'étape de modification pour modifier une consigne du paramètre de vol à asservir par le pilote automatique peut être réalisée par le (ou les) pilote(s) de l'aéronef en faisant tourner le premier organe de commande manuelle à actionnement rotationnel et indépendamment en faisant tourner un troisième organe de commande manuelle à actionnement rotationnel, le troisième organe de commande étant disjoint du premier organe de commande.

Un tel troisième organe de commande est indépendant ou disjoint du premier organe de commande. Le troisième organe de commande peut donc être déporté par rapport au premier organe de commande qui peut être agencé quant à lui à proximité immédiate de l'écran de contrôle. Un tel troisième organe de commande peut cependant permettre de réaliser la même action de modification de la consigne du paramètre de vol à asservir que celle réalisée avec le premier organe de commande. Un tel troisième organe de commande peut ainsi fournir une redondance de l'action qui est réalisée avec le premier organe de commande.

De même que précédemment, l'étape de modification de la consigne du paramètre de vol peut être à la fois effectuée par le(s) pilote(s) soit en faisant tourner sur lui-même le premier organe de commande manuelle à actionnement rotationnel, soit en faisant tourner sur lui-même le troisième organe de commande manuelle à actionnement rotationnel directement accessible et disjoint du premier organe de commande. De la même manière que le premier organe de commande, le troisième organe de commande peut être actionné par au moins deux doigts d'une même main d'un pilote. Un tel troisième organe de commande forme alors une excroissance mobile en rotation autour d'un autre axe de rotation distinct de l'axe de rotation autour duquel le premier organe de commande comporte un degré de mobilité en rotation.

Selon un exemple de réalisation avantageux de l'invention, l'étape d'engagement de mode pour engager le pilote automatique dans le mode correspondant à la consigne modifiée à l'étape de modification du paramètre de vol peut être réalisée par un (ou les) pilote(s) de l'aéronef en appuyant sur le deuxième organe de commande manuelle à actionnement translationnel et indépendamment en appuyant sur un quatrième organe de commande manuelle à actionnement translationnel, le quatrième organe de commande étant disjoint du deuxième organe de commande.

Ainsi, l'étape d'engagement de mode pour engager le pilote automatique peut être à la fois effectuée par le(s) pilote(s) soit en appuyant sur le deuxième organe de commande manuelle à actionnement translationnel, soit en appuyant sur le quatrième organe de commande manuelle à actionnement translationnel directement accessible et disjoint du deuxième organe de commande. De la même manière que le deuxième organe de commande, le quatrième organe de commande peut être actionné par au moins un doigt d'une même main d'un pilote. Un tel quatrième organe de commande forme alors un bouton mobile en translation suivant un autre axe de translation distinct d'un axe de translation suivant lequel le deuxième organe de commande comporte un degré de mobilité en translation.

Un tel quatrième organe de commande est indépendant ou disjoint du deuxième organe de commande. Le quatrième organe de commande peut donc être déporté par rapport au deuxième organe de commande qui peut être agencé quant à lui à proximité immédiate de l'écran de contrôle. Un tel quatrième organe de commande peut cependant permettre de réaliser la même action de modification de la consigne du paramètre de vol à asservir que celle réalisée avec le deuxième organe de commande. Un tel quatrième organe de commande peut ainsi fournir une redondance de l'action qui est réalisée avec le deuxième organe de commande.

Avantageusement, le procédé peut comporter une étape d'affichage annexe permettant d'afficher les paramètres de vol de l'aéronef sur un écran de contrôle supplémentaire, l'étape d'affichage annexe permettant au moins à un autre pilote de l'aéronef de visualiser simultanément sur l'écran de contrôle supplémentaire l'étape de sélection et l'étape de modification effectuées par le (ou les) pilote(s) et affichées sur l'écran de contrôle.

Autrement dit, un tel procédé de commande d'un pilote automatique permet à deux pilotes d'un aéronef de visualiser simultanément les actions effectuées par chacun des deux pilotes pour sélectionner un paramètre de vol à asservir, pour modifier une consigne du paramètre de vol sélectionné et pour engager le pilote automatique dans un mode correspondant à la consigne modifiée. Par suite dans ce cas, chacun des pilotes peut avoir un écran de contrôle personnel qui est positionné de manière sensiblement centrale dans son champ de vision.

Comme déjà évoqué, la présente invention a aussi pour objet un système de commande d'un pilote automatique d'aéronef pour la mise en oeuvre du procédé décrit ci-dessus.

En outre, un tel système comporte au moins :
- un écran de contrôle réalisant un affichage d'au moins deux paramètres de vol de l'aéronef, l'écran de contrôle comportant une surface tactile,
- un premier organe de commande permettant au(x) pilote(s) de modifier une consigne du paramètre de vol à asservir par le pilote automatique, le premier organe de commande étant de type manuel à actionnement rotationnel, le premier organe de commande comportant un degré de mobilité en rotation par rapport à un châssis fixe autour d'un axe de rotation, et
- un deuxième organe de commande permettant d'engager le pilote automatique dans un mode correspondant à la consigne modifiée au moyen du premier organe de commande le deuxième organe de commande étant de type manuel à actionnement translationnel, le deuxième organe de commande présentant un degré de mobilité en translation par rapport au châssis fixe suivant un axe de translation entre une position initiale de repos et une position actionnée d'engagement.

Selon l'invention, le système de commande est remarquable en ce que la surface tactile de l'écran de contrôle permet au(x) pilote(s) de sélectionner le paramètre de vol à asservir par le pilote automatique, en ce que le premier organe de commande est agencé à proximité immédiate de l'écran de contrôle, l'axe de rotation du degré de mobilité en rotation du premier organe de commande par rapport au châssis fixe étant agencé perpendiculairement par rapport à l'écran de contrôle et en ce que le deuxième organe de commande coopère avec des moyens de rappel élastique permettant au deuxième organe de commande de revenir dans la position initiale de repos une fois l'appui relâché par le(s) pilote(s) de l'aéronef.

En d'autres termes, le système de commande permet au(x) pilote(s) de réaliser successivement les différentes étapes du procédé de commande. Un tel système de commande est donc particulièrement ergonomique et avantageux pour limiter la masse induite par les moyens de commande d'un pilote automatique d'aéronef. En outre, la surface tactile permet à un pilote de sélectionner le paramètre de vol qu'il souhaite asservir par le pilote automatique directement en touchant une zone tactile correspondant à l'affichage donnant la valeur courante du paramètre de vol correspondant. Une telle sélection du paramètre de vol à asservir est donc particulièrement intuitive et permet d'éviter tout risque d'erreur de manipulation lors de cette étape de sélection du paramètre de vol.

De même, un tel système comporte d'une part le premier organe de commande dédié qui permet de modifier la consigne de chacun des paramètres de vol à asservir et d'autre part le deuxième organe de commande dédié qui permet d'engager le pilote automatique dans le mode dédié correspondant à la consigne qui a été modifié précédemment par le premier organe de commande.

Par ailleurs, un tel agencement du premier organe de commande par rapport à l'écran de contrôle est particulièrement adapté pour optimiser l'ergonomie de la commande du pilote automatique par le(s) pilote(s) de l'aéronef. Le pilote regarde l'écran de contrôle pour sélectionner le paramètre de vol à asservir, puis actionne le premier organe de contrôle qui se trouve également dans son champ de vision car il est situé à proximité immédiate de l'écran. Les actions de rotation exercées par un pilote sur le premier organe de commande sont alors visualisées instantanément par le pilote qui peut maintenir constamment son regard sur l'écran de contrôle.

De même et selon un autre exemple de réalisation avantageux de l'invention, le deuxième organe de commande peut être agencé à proximité immédiate de l'écran de contrôle, l'axe de translation étant agencé perpendiculairement par rapport à l'écran de contrôle.

Ainsi, comme précédemment un tel agencement permet de rendre optimale l'ergonomie de la commande du pilote automatique par le(s) pilote(s) de l'aéronef. Le pilote regarde l'écran de contrôle, sélectionne le paramètre de vol à asservir, actionne le premier organe de contrôle et appuie sur le deuxième organe de commande qui se trouve dans son champ de vision à proximité immédiate de l'écran. L'appui exercé par un pilote sur le deuxième organe de commande est alors visualisé instantanément par le pilote qui peut maintenir constamment son regard sur l'écran de contrôle.

Avantageusement, l'axe de rotation du premier organe de commande peut être agencé coaxialement avec l'axe de translation du deuxième organe de commande.

Ainsi, le deuxième organe de commande peut être directement actionné par le pilote en appuyant dans une zone centrale agencée au niveau d'une extrémité libre du premier organe de commande.

En pratique, le premier organe de commande et le deuxième organe de commande peuvent former un ensemble monolithique.

Dans ce cas, l'ergonomie de la commande du pilote automatique est encore optimisée car le pilote n'a qu'un seul organe de commande à saisir, par exemple avec deux doigts d'une même main tels que le pouce et l'index, pour à la fois modifier la consigne du paramètre de vol à asservir et pour engager le pilote automatique dans le mode correspondant à la consigne modifiée. Le pilote peut ainsi faire pivoter sur lui-même l'ensemble monolithique avant d'appuyer dessus lorsqu'il souhaite engager le mode du pilote automatique.

Selon encore un autre exemple de réalisation avantageux de l'invention, le premier organe de commande peut comporter au moins deux molettes agencées coaxialement en étant mobiles indépendamment en rotation par rapport à l'axe de rotation, une première molette permettant de modifier la consigne du paramètre de vol à asservir par le pilote automatique avec une première valeur d'incrément entre deux valeurs consécutives de la consigne et une seconde molette permettant de modifier la consigne du paramètre de vol à asservir par le pilote automatique avec une seconde valeur d'incrément entre deux autres valeurs consécutives de la consigne, la première valeur d'incrément étant distincte de la seconde valeur d'incrément.

Un tel premier organe de commande permet ainsi de réduire le temps nécessaire pour parvenir à une consigne lointaine du paramètre de vol à asservir. En effet, le pilote peut alors actionner dans un premier temps la première molette pour modifier la consigne du paramètre à asservir avec la première valeur d'incrément puis, une fois que la consigne modifiée courante est proche de la valeur de la consigne à atteindre, le pilote actionne alors la deuxième molette avec une seconde valeur d'incrément entre deux autres valeurs consécutives de la consigne qui est inférieure à la première valeur d'incrément. La deuxième molette permet alors un réglage plus précis de la consigne du paramètre à asservir qu'avec la première molette. Par exemple, le rapport entre la première valeur d'incrément est la deuxième valeur d'incrément peut être de 2, 10 ou encore de 100.

Avantageusement, le système peut comporter un dispositif de commande de pointeur pour déplacer un pointeur sur l'écran de contrôle, le dispositif de commande de pointeur étant disjoint de l'écran de contrôle.

Comme déjà évoqué, un tel dispositif de commande de pointeur peut par exemple être formé par un « trackball », un pavé tactile ou encore consister en un pad ou un « chapeau chinois multidirectionnel » et être agencé au niveau d'un mini-manche de commande pilotage de la trajectoire de l'aéronef.

En pratique, le système peut comporter un troisième organe de commande manuelle à actionnement rotationnel, le troisième organe de commande étant disjoint du premier organe de commande.

En d'autres termes, le troisième organe de commande peut être déporté par rapport au premier organe de commande qui peut être agencé à proximité immédiate de l'écran de contrôle. Un tel troisième organe de commande peut cependant permettre de réaliser la même action de modification de la consigne du paramètre de vol à asservir que celle réalisée avec le premier organe de commande. Un tel troisième organe de commande peut ainsi fournir une redondance de l'action qui est réalisée avec le premier organe de commande.

Selon encore un autre exemple de réalisation avantageux de l'invention, le système peut comporter un quatrième organe de commande manuelle à actionnement translationnel, le quatrième organe de commande étant disjoint du deuxième organe de commande.

Autrement dit, le quatrième organe de commande peut également être déporté par rapport au deuxième organe de commande qui peut être agencé à proximité immédiate de l'écran de contrôle. Un tel quatrième organe de commande peut cependant permettre de réaliser la même action d'engagement du pilote automatique que celle réalisée avec le deuxième organe de commande. Un tel quatrième organe de commande fournit ainsi une redondance de l'action qui est réalisée avec le deuxième organe de commande.

Avantageusement, le dispositif de commande de pointeur, le troisième organe de commande manuelle à actionnement rotationnel et le quatrième organe de commande manuelle à actionnement translationnel peuvent être agencés sur un boitier de commande, le boîtier de commande étant à la fois disjoint de l'écran de contrôle, du premier organe de commande et du deuxième organe de commande.

Ainsi, un tel boitier de commande permet de fournir une solution de redondance centralisée de l'ensemble des moyens de commande permettant de mettre en oeuvre les différentes étapes de commande du procédé objet de l'invention. Un tel boitier de commande peut être agencé sur ou à proximité immédiate du mini-manche de commande des trajectoires de l'aéronef.

En pratique, le système peut comporter un écran de contrôle supplémentaire pour afficher les paramètres de vol de l'aéronef, l'écran de contrôle supplémentaire permettant au moins à un autre pilote de l'aéronef de visualiser le paramètre de vol à asservir par le pilote automatique qui est sélectionné par le (ou les) pilote(s) et la consigne du paramètre de vol à asservir par le pilote automatique qui est modifiée par le (ou les) pilote(s).

Comme déjà évoqué, un tel écran de contrôle supplémentaire peut permettre à deux pilotes de visualiser simultanément les différentes étapes du procédé de commande mises en œuvre par l'un (ou les) deux pilotes. De plus, la présence d'un écran de contrôle supplémentaire permet également de fournir une solution de redondance pour la commande de sélection du paramètre de vol à asservir dans le cas où la zone tactile de l'écran de contrôle principal aurait un disfonctionnement.

L'invention se rapporte également à un aéronef comportant un système de commande tel que décrit ci-dessus d'un pilote automatique d'aéronef

Selon l'invention, un tel aéronef est remarquable en ce que le premier organe de commande et/ou le deuxième organe de commande est/sont actionné(s) pour mettre en œuvre au moins un autre procédé distinct du procédé de commande précédemment décrit d'un pilote automatique d'aéronef, ce(s) autre(s) procédé(s) étant choisi(s) parmi le groupe comportant le groupe comportant un procédé de réglage d'une pression atmosphérique de référence (QNH) et un procédé de réglage de moyens de radio-communication permettant de modifier une fréquence d'un signal de radio-communication et/ou un volume sonore de ce signal de radio-communication.

Autrement dit, le premier organe de commande manuelle à actionnement rotationnel et/ou le deuxième organe de commande manuelle à actionnement translationnel peu(ven)t ne pas être spécifiquement dédié(s) à la mise en œuvre du procédé de commande d'un pilote automatique d'aéronef. Ces premier et second organes de commande peuvent en effet être utilisés également pour mettre œuvre les autres procédés tels que décrits ci-dessus.

L'invention et ses avantages apparaîtront avec plus de détails dans le cadre de la description qui suit avec des exemples donnés à titre illustratif en référence aux figures annexées qui représentent :
- la figure 1, schématiquement une vue de côté d'un aéronef conforme à l'invention
- les figures 2 à 4, des schémas de principe illustrant trois exemples de systèmes de commande de pilote automatique conformes à l'invention,
- la figure 5, une vue en perspective d'un premier organe de commande manuelle à actionnement rotationnel, conformément à l'invention, et
- la figure 6, un logigramme illustrant schématiquement une succession d'étapes du procédé de commande de pilote automatique conforme à l'invention.

Les éléments présents dans plusieurs figures distinctes sont affectés d'une seule et même référence.

Comme déjà évoqué, l'invention se rapporte donc au domaine de la commande d'un pilote automatique équipant un aéronef tel que notamment un avion ou un giravion.

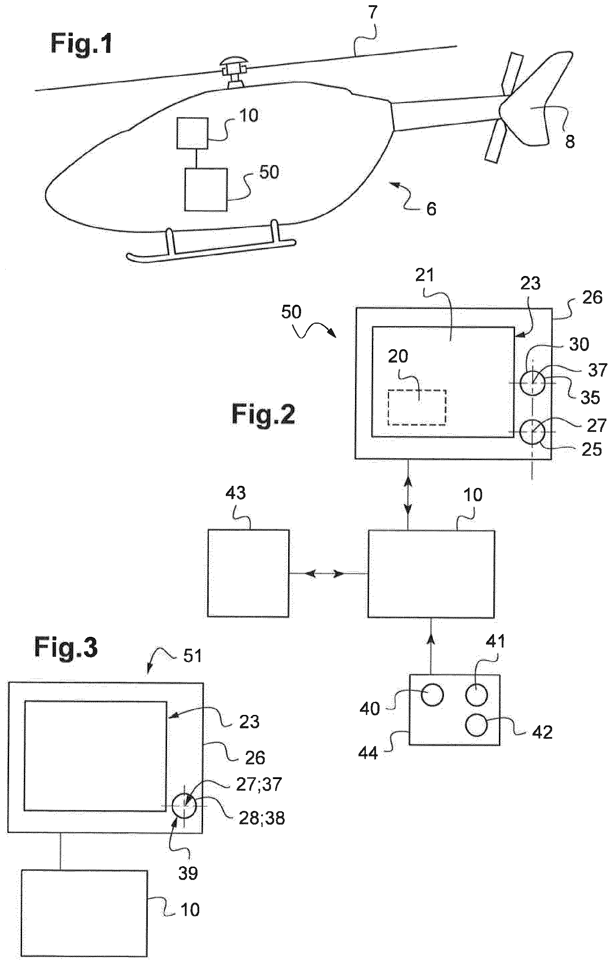

Ainsi tel que représenté à la figure 1 selon un exemple de réalisation particulier, l'aéronef 6 peut se présenter sous la forme d'un giravion comportant notamment un rotor principal 7 et un rotor arrière 8. En outre, un tel aéronef 6 comporte également un système de commande 50 permettant de commander au moins un pilote automatique 10. Un tel pilote automatique 10 est un dispositif utilisé classiquement pour permettre de réduire, au moins temporairement, la charge de travail nécessaire au pilotage d'un tel aéronef 6.

Tel que représenté à la figure 2, un système de commande 50 d'un pilote automatique 10 comporte au moins un écran de contrôle 23 muni d'une surface tactile 21 pour permettre à un pilote de sélectionner un paramètre de vol à asservir par le pilote automatique 10. Un tel écran de contrôle 23 est ainsi agencé sur un châssis fixe 26 solidarisé avec une planche de bord dans le cockpit de l'aéronef 6. Un pilote peut alors sélectionner un paramètre de vol à asservir par le pilote automatique 10 en touchant une zone tactile 20 de la surface tactile 21.

En pratique, une telle zone tactile 20 peut permettre également l'affichage d'une valeur courante du paramètre de vol à asservir par le pilote automatique. Une fois le paramètre de vol sélectionné, une information peut s'afficher et consister par exemple au clignotement d'un indice sur une échelle ou au changement de couleur de cet indice. Une telle information visuelle permet alors d'informer le pilote que la sélection du paramètre de vol à asservir a bien été prise en compte par le système de commande 50.

En outre, le système de commande 50 comporte également un premier organe de commande 25 manuelle à actionnement rotationnel mobile en rotation par rapport au châssis fixe 26 autour d'un axe de rotation 27. Un tel premier organe de commande 25 est tel que représenté directement agencé à proximité immédiate de l'écran de contrôle 23.

Le premier organe de commande 25 permet de modifier la consigne du paramètre de vol à asservir par le pilote automatique 10 qui a été précédemment sélectionné par le pilote.

Par ailleurs, le système de commande 50 comporte aussi un deuxième organe de commande 35 manuelle à actionnement translationnel mobile en translation par rapport au châssis fixe 26 suivant un axe de translation 37. Un tel deuxième organe de commande 35 est donc mobile entre une position de repos et une position de travail lorsque le pilote de l'aéronef 6 appuie sur une extrémité libre du deuxième organe de commande 35. Des moyens de rappel élastique 30 peuvent alors permettre de rappeler le deuxième organe de commande 35 dans sa position initiale de repos lorsque le pilote n'exerce plus un effort de poussée sur l'extrémité libre du deuxième organe de commande 35.

Un tel deuxième organe de commande 35 permet au pilote quant à lui d'engager le pilote automatique 10 dans un mode correspondant à la consigne modifiée par le premier organe de commande 25.

Tel que représenté, le système de commande 50 peut également comporter un boitier de commande 44 qui est disjoint du châssis fixe 26. Un tel boitier de commande 44 peut quant à lui comporter un dispositif de commande de pointeur 40, un troisième organe de commande 41 manuelle à actionnement rotationnel et un quatrième organe de commande 42 manuelle à actionnement translationnel. Un tel boitier de commande 44 est avantageusement agencé dans le cockpit de l'aéronef 6 de manière à être directement actionnable par le pilote par exemple en étant agencé sur un organe de pilotage des trajectoires de l'aéronef 6 tel un mini-manche ou à proximité immédiate de cet organe de pilotage.

En outre, le dispositif de commande de pointeur 40 peut être formé par exemple par un pavé tactile, un « chapeau chinois multidirectionnel » ou un « trackball » pour déplacer un pointeur sur l'écran de contrôle 23 et sélectionner un paramètre de vol à asservir par le pilote automatique 10.

Le troisième organe de commande 41 permet quant à lui d'effectuer la même action de modification de la consigne du paramètre de vol à asservir qui est effectuée par le premier organe de commande 25. Par analogie, le quatrième organe de commande 42 permet quant à lui d'effectuer la même action d'engagement de pilote automatique qui est effectuée par le deuxième organe de commande 35.

Avantageusement dans le cas où un tel système de commande 50 équipe un aéronef 6 piloté par deux pilotes, le système de commende 50 peut comporter un écran de contrôle supplémentaire 43. Un tel écran de contrôle supplémentaire 43 permet alors d'afficher pour un second pilote par exemple les valeurs courantes des différents paramètres de vol de l'aéronef 6 mais également le paramètre de vol sélectionné par un premier pilote et également la consigne du paramètre de vol à asservir par le pilote automatique 10 qui est modifiée par le premier pilote.

Selon un autre exemple de réalisation du système de commande 51 tel que représenté à la figure 3, le premier organe de commande 28 et le deuxième organe de commande 38 peuvent être agencés coaxialement. Dans ce cas, l'axe de rotation 27 du premier organe de commande 28 est alors confondu avec l'axe de translation 37 du deuxième organe de commande 38.

De plus selon cet autre exemple de réalisation du système de commande 51, le premier organe de commande 28 et le deuxième organe de commande 38 peuvent également former un ensemble monolithique 39 qui est ainsi à la fois actionnable en rotation et en translation par rapport au châssis fixe 26.

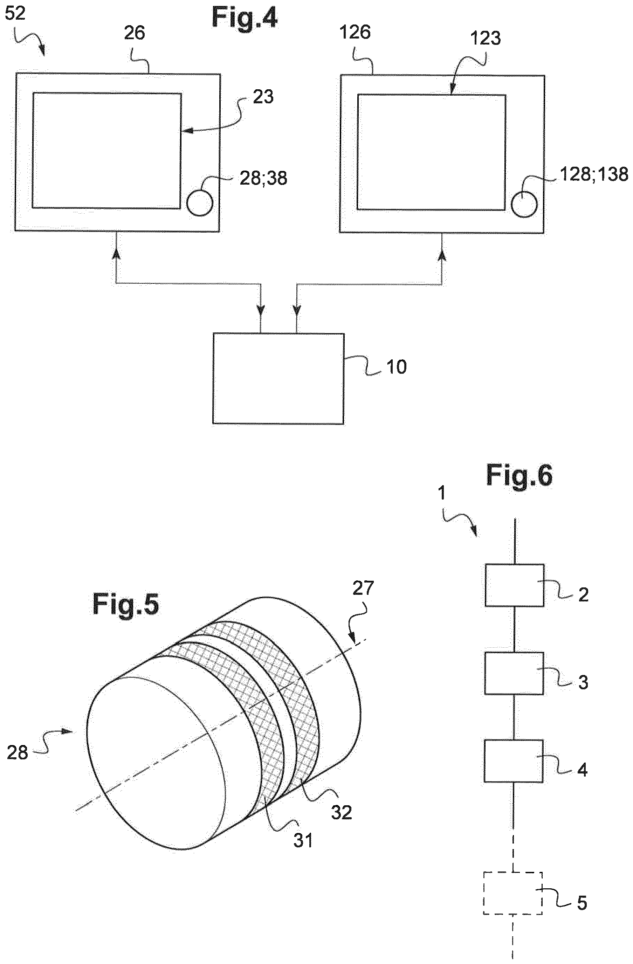

Selon l'exemple de réalisation illustré à la figure 4, le système de commande 52 peut également comporter un écran de contrôle supplémentaire 123, un troisième organe de commande 128 et un quatrième organe de commande 138 agencés au niveau d'un autre châssis fixe 126 dans le cockpit de l'aéronef 6.

Un tel agencement permet alors de fournir une redondance des commandes du pilote automatique 10 et/ou à deux pilotes de l'aéronef 6 d'effectuer la sélection du paramètre à asservir, la modification de la consigne du paramètre de vol et l'engagement du pilote automatique dans le mode correspondant.

Tel que représenté à la figure 5, le premier organe de commande 28 peut avantageusement comporter deux molettes 31, 32 agencées coaxialement en étant mobiles indépendamment en rotation par rapport à l'axe de rotation 27. Ainsi, une première molette 31 permet de modifier la consigne du paramètre de vol à asservir par le pilote automatique 10 avec une première valeur d'incrément entre deux valeurs consécutives de la consigne, tandis qu'une seconde molette 32 permet de modifier la consigne du paramètre de vol à asservir par le pilote automatique 10 avec une seconde valeur d'incrément entre deux autres valeurs consécutives de la consigne.

En outre, un tel agencement permet de choisir une première valeur d'incrément distincte de la seconde valeur d'incrément pour par exemple améliorer la rapidité et la sensibilité de modification de la consigne du paramètre de vol à modifier. La première valeur d'incrément peut par exemple être égale à 100 pour modifier rapidement la consigne du paramètre de vol tandis que la seconde valeur d'incrément peut par exemple être égale à 1 pour régler plus finement cette consigne du paramètre de vol.

Telle que représentée à la figure 6, l'invention concerne un procédé de commande 1 d'un pilote automatique 10 d'aéronef 6 comportant une succession d'étapes telles :
- une étape de sélection 2 pour sélectionner le paramètre de vol à asservir par le pilote automatique 10,
- une étape de modification 3 pour modifier une consigne du paramètre de vol à asservir par le pilote automatique 10, et
- une étape d'engagement de mode 4 pour engager le pilote automatique 10 dans un mode correspondant à la consigne modifiée à l'étape de modification 3 du paramètre de vol.

En outre, l'étape de sélection 2 peut être réalisée par au moins un pilote de l'aéronef 6 en touchant la zone tactile 20 agencée sur la surface tactile 21 de l'écran de contrôle 23 ou indifféremment avec le dispositif de commande de pointeur 40.

L'étape de modification 3 peut quant à elle être réalisée par le(s) pilote(s) de l'aéronef 6 en faisant tourner le premier organe de commande 25, 28 ou indifféremment avec le troisième organe de commande 41, 128. Dans le cas où le premier organe de commande 25, 28 comporte deux molettes 31, 32, cette étape de modification 3 pour modifier une consigne du paramètre de vol peut être réalisée en deux temps. Le pilote tourne d'abord la première molette 31 permettant de modifier la consigne avec un premier incrément entre deux valeurs consécutives puis le pilote tourne la seconde molette 32 permettant de modifier la consigne avec un second incrément inférieur au premier incrément.

L'étape d'engagement de mode 4 peut être mise en œuvre par le(s) pilote(s) de l'aéronef 6 en appuyant sur le deuxième organe de commande 35, 38 ou indifféremment avec le quatrième organe de commande 42, 138.

Au surplus, le procédé 1 peut également comporter une étape d'affichage annexe 5 pour afficher les paramètres de vol de l'aéronef 6 sur l'écran de contrôle supplémentaire 43, 123. Une telle étape d'affichage annexe 5 permet alors au moins à un autre pilote de l'aéronef 6 de visualiser simultanément sur l'écran de contrôle supplémentaire 43, 123 l'étape de sélection 2 et l'étape de modification 3 effectuées par le pilote et affichées sur l'écran de contrôle 23.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé de commande (1) d'un pilote automatique (10) d'aéronef (6),
ledit procédé (1) comportant une succession d'étapes comportant au moins :
• une étape de sélection (2) pour sélectionner un paramètre de vol à asservir par ledit pilote automatique (10),
• une étape de modification (3) pour modifier une consigne dudit paramètre de vol à asservir par ledit pilote automatique (10), ladite étape de modification (3) étant réalisée par ledit au moins un pilote de l'aéronef (6) en faisant tourner un premier organe de commande (25, 28) manuelle à actionnement rotationnel, ledit premier organe de commande (25, 28) comportant un degré de mobilité en rotation par rapport à un châssis fixe (26) autour d'un axe de rotation (27), et
• une étape d'engagement de mode (4) pour engager ledit pilote automatique (10) dans un mode correspondant à ladite consigne modifiée à ladite étape de modification (3) dudit paramètre de vol, ladite étape d'engagement de mode (4) étant réalisée par ledit au moins un pilote de l'aéronef (6) en appuyant sur un deuxième organe de commande (35, 38) manuelle à actionnement translationnel, ledit deuxième organe de commande (35, 38) présentant un degré de mobilité en translation par rapport audit châssis fixe (26) suivant un axe de translation (37) entre une position initiale de repos et une position actionnée d'engagement,
**caractérisé en ce que** ladite étape de sélection (2) est au moins réalisée par au moins un pilote de l'aéronef (6) en touchant une zone tactile (20) agencée sur une surface tactile (21) d'un écran de contrôle (23) réalisant un affichage d'au moins deux paramètres de vol dudit aéronef (6), **en ce que** ladite étape de modification (3) est réalisée au moyen dudit premier organe de commande (25, 28) agencé à proximité immédiate dudit écran de contrôle (23) en faisant tourner ledit premier organe de commande (25, 28) par rapport audit châssis fixe (26) autour dudit axe de rotation (27) agencé perpendiculairement par rapport audit écran de contrôle (23) et **en ce que** ladite étape d'engagement de mode (4) est réalisée en appuyant sur ledit deuxième organe de commande (35, 38) coopérant avec des moyens de rappel élastique (30) permettant audit deuxième organe de commande (35, 38) de revenir dans ladite position initiale de repos une fois l'appui relâché par ledit au moins un pilote de l'aéronef (6).

2. Procédé selon la revendication 1,
**caractérisé en ce que** ladite étape de sélection (2) pour sélectionner un paramètre de vol à asservir par ledit pilote automatique (10) est réalisée par au moins un pilote de l'aéronef (6) en touchant ladite zone tactile (20) agencée sur ladite surface tactile (21) et indépendamment en actionnant un dispositif de commande de pointeur (40) pour déplacer un pointeur sur ledit écran de contrôle (23), ledit dispositif de commande de pointeur (40) étant disjoint dudit écran de contrôle (23).

3. Procédé selon l'une quelconque des revendications 1 à 2,
**caractérisé en ce que** ladite étape de modification (3) pour modifier une consigne dudit paramètre de vol à asservir par ledit pilote automatique (10) est réalisée par ledit au moins un pilote de l'aéronef (6) en faisant tourner ledit premier organe de commande (25, 35) manuelle à actionnement rotationnel et indépendamment en faisant tourner un troisième organe de commande (41, 128) manuelle à actionnement rotationnel, ledit troisième organe de commande (41, 128) étant disjoint dudit premier organe de commande (25, 28).

4. Procédé selon l'une quelconque des revendications 1 à 3,
**caractérisé en ce que** ladite étape d'engagement de mode (4) pour engager ledit pilote automatique (10) dans le mode correspondant à ladite consigne modifiée à ladite étape de modification (3) dudit paramètre de vol est réalisée par au moins un pilote de l'aéronef (6) en appuyant sur ledit deuxième organe de commande (35, 38) manuelle à actionnement translationnel et indépendamment en appuyant sur un quatrième organe de commande (42, 138) manuelle à actionnement translationnel, ledit quatrième organe de commande (42, 138) étant disjoint dudit deuxième organe de commande (35, 38).

5. Procédé selon l'une quelconque des revendications 1 à 4,
**caractérisé en ce que** ledit procédé (1) comporte une étape d'affichage annexe (5) permettant d'afficher lesdits au moins deux paramètres de vol dudit aéronef (6) sur un écran de contrôle supplémentaire (43, 123), ladite étape d'affichage annexe (5) permettant au moins à un autre pilote dudit aéronef (6) de visualiser simultanément sur ledit écran de contrôle supplémentaire (43, 123) ladite étape de sélection (2) et ladite étape de modification (3) effectuées par ledit au moins un pilote et affichées sur ledit écran de contrôle (23).

6. Système de commande (50, 51, 52) d'un pilote automatique (10) d'aéronef (6) pour la mise en œuvre d'un procédé (1) selon l'une quelconque des revendications 1 à 5,
ledit système (50, 51, 52) comportant au moins :
• un écran de contrôle (23) réalisant un affichage d'au moins deux paramètres de vol dudit aéronef (6), ledit écran de contrôle (23) comportant une surface tactile (21),
• un premier organe de commande (25, 28) permettant audit au moins un pilote de modifier une consigne dudit paramètre de vol à asservir par ledit pilote automatique (10), ledit premier organe de commande (25, 28) étant de type manuel à actionnement rotationnel, ledit premier organe de commande (25, 28) comportant un degré de mobilité en rotation par rapport à un châssis fixe (26) autour d'un axe de rotation (27), et
• un deuxième organe de commande (35, 38) permettant d'engager ledit pilote automatique (10) dans un mode correspondant à ladite consigne modifiée au moyen dudit premier organe de commande (25, 28), ledit deuxième organe de commande (35, 38) étant de type manuel à actionnement translationnel, ledit deuxième organe de commande (35, 38) présentant un degré de mobilité en translation par rapport audit châssis fixe (26) suivant un axe de translation (37) entre une position initiale de repos et une position actionnée d'engagement,
**caractérisé en ce que** ladite surface tactile (21) dudit écran de contrôle (23) permet à au moins un pilote de sélectionner ledit paramètre de vol à asservir par ledit pilote automatique (10), **en ce que** ledit premier organe de commande (25, 28) est agencé à proximité immédiate dudit écran de contrôle (23), ledit axe de rotation (27) dudit degré de mobilité en rotation dudit premier organe de commande (25, 28) par rapport audit châssis fixe (26) étant agencé perpendiculairement par rapport audit écran de contrôle (23) et **en ce que** ledit deuxième organe de commande (35, 38) coopère avec des moyens de rappel élastique (30) permettant audit deuxième organe de commande (35, 38) de revenir dans ladite position initiale de repos une fois l'appui relâché par ledit au moins un pilote de l'aéronef (6).

7. Système selon la revendication 6 ,
**caractérisé en ce que** ledit deuxième organe de commande (35, 38) est agencé à proximité immédiate dudit écran de contrôle (23), ledit axe de translation (37) étant agencé perpendiculairement par rapport audit écran de contrôle (23).

8. Système selon l'une quelconque des revendications 6 à 7,
**caractérisé en ce que** ledit axe de rotation (27) dudit premier organe de commande (28) est agencé coaxialement avec ledit axe de translation (37) dudit deuxième organe de commande (38).

9. Système selon la revendication 8,
**caractérisé en ce que** ledit premier organe de commande (28) et ledit deuxième organe de commande (38) forment un ensemble monolithique (39).

10. Système selon l'une quelconque des revendications 6 à 9,
**caractérisé en ce que** ledit premier organe de commande (28) comporte au moins deux molettes (31, 32) agencées coaxialement en étant mobiles indépendamment en rotation par rapport audit axe de rotation (27), une première molette (31) permettant de modifier ladite consigne dudit paramètre de vol à asservir par ledit pilote automatique (10) avec une première valeur d'incrément entre deux valeurs consécutives de ladite consigne et une seconde molette (32) permettant de modifier ladite consigne dudit paramètre de vol à asservir par ledit pilote automatique (10) avec une seconde valeur d'incrément entre deux autres valeurs consécutives de ladite consigne, ladite première valeur d'incrément étant distincte de ladite seconde valeur d'incrément.

11. Système selon l'une quelconque des revendications 6 à 10,
**caractérisé en ce que** ledit système (50, 51, 52) comporte un dispositif de commande de pointeur (40) pour déplacer un pointeur sur ledit écran de contrôle (23), ledit dispositif de commande de pointeur (40) étant disjoint dudit écran de contrôle (23).

12. Système selon l'une quelconque des revendications 6 à 11,
**caractérisé en ce que** ledit système (50, 52) comporte un troisième organe de commande (41, 128) manuelle à actionnement rotationnel, ledit troisième organe de commande (41, 128) étant disjoint dudit premier organe de commande (25, 28).

13. Système selon l'une quelconque des revendications 6 à 12,
**caractérisé en ce que** ledit système (50, 52) comporte un quatrième organe de commande (42, 138) manuelle à actionnement translationnel, ledit quatrième organe de commande (42, 138) étant disjoint dudit deuxième organe de commande (35, 38).

14. Système selon les revendications 11 à 13,
**caractérisé en ce que** ledit dispositif de commande de pointeur (40), ledit troisième organe de commande (41) manuelle à actionnement rotationnel et ledit quatrième organe de commande (42) manuelle à actionnement translationnel sont agencés sur un boitier de commande (44), ledit boîtier de commande (44) étant à la fois disjoint dudit écran de contrôle (23), dudit premier organe de commande (25) et dudit deuxième organe de commande (35).

15. Système selon l'une quelconque des revendications 6 à 14,
**caractérisé en ce que** ledit système (50, 52) comporte un écran de contrôle supplémentaire (43, 123) pour afficher lesdits au moins deux paramètres de vol dudit aéronef (6), ledit écran de contrôle supplémentaire (43, 123) permettant au moins à un autre pilote dudit aéronef (6) de visualiser ledit paramètre de vol à asservir par ledit pilote automatique (10) qui est sélectionné par ledit au moins un pilote et ladite consigne dudit paramètre de vol à asservir par ledit pilote automatique (10) qui est modifiée par ledit au moins un pilote.

16. Aéronef (6) comportant un système de commande (50, 51, 52) d'un pilote automatique (10) d'aéronef (6) selon l'une quelconque des revendications 6 à 15,
**caractérisé en ce que** ledit premier organe de commande (25, 28) et/ou ledit deuxième organe de commande (35, 38) est/sont actionné(s) pour mettre en œuvre au moins un autre procédé distinct dudit procédé de commande (1) d'un pilote automatique (10) d'aéronef (6) selon les revendications 1 à 5, ledit au moins un autre procédé étant choisi parmi le groupe comportant un procédé de réglage d'une pression atmosphérique de référence (QNH) et un procédé de réglage de moyens de radio-communication permettant de modifier une fréquence d'un signal de radio-communication et/ou un volume sonore dudit signal de radio-communication.

## Patentansprüche

1. Verfahren zum Steuern (1) eines Autopiloten (10) eines Luftfahrzeugs (6),
wobei das Verfahren (1) eine Folge von Schritten umfasst, die mindestens umfasst:
- einen Auswahlschritt (2) zum Auswählen eines Flugparameters, der durch den Autopiloten (10) gesteuert werden soll,
- einen Modifikationsschritt (3) zum Modifizieren eines Sollwerts des von dem Autopiloten (10) zu steuernden Flugparameters, wobei der Modifikationsschritt (3) von dem mindestens einen Piloten des Luftfahrzeugs (6) durch Drehen eines manuellen ersten Steuerelements (25, 28) mit Drehbetätigung durchgeführt wird, wobei das erste Steuerelement (25, 28) einen Drehfreiheitsgrad um eine Drehachse (27) in Bezug auf einen festen Rahmen (26) aufweist, und
- einen Moduseinstellschritt (4) zum Einstellen des Autopiloten (10) in einen Modus, der dem im Modifikationsschritt (3) des Flugparameters geänderten Sollwert entspricht, wobei der Moduseinstellschritt (4) von dem mindestens einen Piloten des Luftfahrzeugs (6) durch Drücken eines manuellen zweiten Steuerelements (35, 38) mit translatorischer Betätigung ausgeführt wird, wobei das zweite Steuerelement (35, 38) einen Translationsfreiheitsgrad in Bezug auf den festen Rahmen (26) entlang einer Translationsachse (37) zwischen einer anfänglichen Ruheposition und einer betätigten Einstellposition aufweist,
**dadurch gekennzeichnet, dass** der Auswahlschritt (2) von mindestens einem Piloten des Luftfahrzeugs (6) durchgeführt wird durch Berühren eines Berührungsbereichs (20), der auf einer Berührungsfläche (21) eines Steuerbildschirms (23) angeordnet ist, das eine Anzeige von mindestens zwei Flugparametern des Luftfahrzeugs (6) bereitstellt,
dass der Modifikationsschritt (3) mittels des ersten Steuerelements (25, 28) durchgeführt wird durch Drehen des in unmittelbarer Nähe des Steuerbildschirms (23) angeordneten ersten Steuerelements (25, 28) in Bezug auf den festen Rahmen (26) um die Drehachse (27), die senkrecht zu dem Steuerbildschirm (23) angeordnet ist, und
dass der Moduseinstellschritt (4) durch Drücken des zweiten Steuerelements (35, 38) durchgeführt wird, das mit elastischen Rückstellmitteln (30) zusammenwirkt, die es dem zweiten Steuerelement (35, 38) ermöglichen, in die anfängliche Ruheposition zurückzukehren, nachdem der Druck durch den mindestens einen Piloten des Luftfahrzeugs (6) aufgehoben wurde.

2. Verfahren nach Anspruch 1,
**dadurch gekennzeichnet, dass** der Auswahlschritt (2) zum Auswählen eines vom Autopiloten (10) zu steuernden Flugparameters von mindestens einem Piloten des Fluggeräts (6) durch Berühren des auf der Berührungsfläche (21) angeordneten Berührungsbereichs (20) und unabhängig durch Betätigen einer Zeigersteuervorrichtung (40) zum Bewegen eines Zeigers auf dem Steuerbildschirm (23) ausgeführt wird, wobei die Zeigersteuervorrichtung (40) von dem Steuerbildschirm (23) getrennt ist.

3. Verfahren nach einem der Ansprüche 1 bis 2,
**dadurch gekennzeichnet, dass** der Modifikationsschritt (3) zum Modifizieren eines Sollwerts des vom Autopiloten (10) zu steuernden Flugparameters von dem mindestens einen Piloten des Luftfahrzeugs (6) durch Drehen des manuellen ersten Steuerelements (25, 35) mit Drehbetätigung und unabhängig durch Drehen eines manuellen dritten Steuerelements (41, 128) mit Drehbetätigung durchgeführt wird, wobei das dritte Steuerelement (41, 128) von dem ersten Steuerelement (25, 28) getrennt ist.

4. Verfahren nach einem der Ansprüche 1 bis 3,
**dadurch gekennzeichnet, dass** der Moduseinstellschritt (4) zum Einstellen des Autopiloten (10) auf den Modus, der dem im Modifikationsschritt (3) des Flugparameters modifizierten Sollwert entspricht, von mindestens einem Piloten des Fluggeräts (6) durch Drücken des translatorischen manuellen zweiten Steuerelements (35, 38) und unabhängig durch Drücken eines translatorischen manuellen vierten Steuerelements (42, 138) durchgeführt wird, wobei das vierte Steuerelement (42, 138) von dem zweiten Steuerelement (35, 38) getrennt ist.

5. Verfahren nach einem der Ansprüche 1 bis 4,
**dadurch gekennzeichnet, dass** das Verfahren (1) einen Zusatzanzeigeschritt (5) zum Anzeigen der mindestens zwei Flugparameter des Luftfahrzeugs (6) auf einem zusätzlichen Steuerbildschirm (43, 123) umfasst, wobei der Zusatzanzeigeschritt (5) es mindestens einem anderen Piloten des Luftfahrzeugs (6) ermöglicht, auf dem zusätzlichen Steuerbildschirm (43, 123) gleichzeitig den Auswahlschritt (2) und den Modifikationsschritt (3) zu sehen, die von dem mindestens einen Piloten durchgeführt und auf dem Steuerbildschirm (23) angezeigt werden.

6. System (50, 51, 52) zum Steuern eines Autopiloten (10) eines Luftfahrzeugs (6) zum Durchführen eines Verfahrens (1) nach einem der Ansprüche 1 bis 5,
wobei das System (50, 51, 52) mindestens umfasst:
- einen Steuerbildschirm (23), der mindestens zwei Flugparameter des Luftfahrzeugs (6) anzeigt, wobei der Steuerbildschirm (23) eine Berührungsfläche (21) aufweist,
- ein erstes Steuerelement (25, 28), das es dem mindestens einen Piloten ermöglicht, einen Sollwert des von dem Autopiloten (10) zu steuernden Flugparameters zu ändern, wobei das erste Steuerelement (25, 28) vom manuellen Typ mit Drehbetätigung ist, wobei das erste Steuerelement (25, 28) einen Drehfreiheitsgrad um eine Drehachse (27) in Bezug auf einen festen Rahmen (26) aufweist, und
- ein zweites Steuerelement (35, 38) zum Einstellen des Autopiloten (10) auf einen Modus, der dem mittels des ersten Steuerelements (25, 28) modifizierten Sollwert entspricht, wobei das zweite Steuerelement (35, 38) vom manuellen Typ mit translatorischer Betätigung ist, wobei das zweite Steuerelement (35, 38) einen Grad an translatorischer Beweglichkeit in Bezug auf den festen Rahmen (26) entlang einer Translationsachse (37) zwischen einer anfänglichen Ruheposition und einer aktivierten Eingriffsposition aufweist,
**dadurch gekennzeichnet, dass**
die Berührungsfläche (21) des Steuerbildschirms (23) es mindestens einem Piloten ermöglicht, den vom Autopiloten (10) zu steuernden Flugparameter auszuwählen,
das erste Steuerelement (25, 28) in unmittelbarer Nähe des Steuerbildschirms (23) angeordnet ist, wobei die Drehachse (27) des Drehfreiheitsgrades des ersten Steuerelements (25, 28) in Bezug auf den festen Rahmen (26) senkrecht zu dem Steuerbildschirm (23) angeordnet ist, und
das zweite Steuerelement (35, 38) mit elastischen Rückstellmitteln (30) zusammenwirkt, die es dem zweiten Steuerelement (35, 38) ermöglichen, in die anfängliche Ruheposition zurückzukehren, sobald der Druck durch den mindestens einen Piloten des Luftfahrzeugs (6) aufgehoben ist.

7. System nach Anspruch 6,
**dadurch gekennzeichnet, dass** das zweite Steuerelement (35, 38) in unmittelbarer Nähe des Steuerbildschirms (23) angeordnet ist, wobei die Translationsachse (37) senkrecht zum Steuerbildschirm (23) angeordnet ist.

8. System nach einem der Ansprüche 6 bis 7,
**dadurch gekennzeichnet, dass** die Drehachse (27) des ersten Steuerelements (28) koaxial zur Translationsachse (37) des zweiten Steuerelements (38) angeordnet ist.

9. System nach Anspruch 8,
**dadurch gekennzeichnet, dass** das erste Steuerelement (28) und das zweite Steuerelement (38) eine monolithische Anordnung (39) bilden.

10. System nach einem der Ansprüche 6 bis 9,
**dadurch gekennzeichnet, dass** das erste Steuerelement (28) mindestens zwei Räder (31, 32) aufweist, die koaxial angeordnet und unabhängig voneinander in Bezug auf die Drehachse (27) drehbar sind, ein erstes Rad (31) zum Ändern des Sollwerts des vom Autopiloten (10) zu steuernden Flugparameters mit einem ersten Inkrementwert zwischen zwei aufeinanderfolgenden Werten des Sollwerts und ein zweites Rad (32) zum Ändern des Sollwerts des vom Autopiloten (10) zu steuernden Flugparameters mit einem zweiten Inkrementwert zwischen zwei anderen aufeinanderfolgenden Werten des Sollwerts, wobei der erste Inkrementwert von dem zweiten Inkrementwert verschieden ist.

11. System nach einem der Ansprüche 6 bis 10,
**dadurch gekennzeichnet, dass** das System (50, 51, 52) eine Zeigersteuervorrichtung (40) zum Bewegen eines Zeigers über den Steuerbildschirm (23) aufweist, wobei die Zeigersteuervorrichtung (40) von dem Steuerbildschirm (23) getrennt ist.

12. System nach einem der Ansprüche 6 bis 11,
**dadurch gekennzeichnet, dass** das System (50, 52) ein drittes manuelles Steuerelement (41, 128) mit Drehbetätigung aufweist, wobei das dritte Steuerelement (41, 128) von dem ersten Steuerelement (25, 28) getrennt ist.

13. System nach einem der Ansprüche 6 bis 12,
**dadurch gekennzeichnet, dass** das System (50, 52) ein translatorisches manuelles viertes Steuerelement (42, 138) umfasst, wobei das vierte Steuerelement (42, 138) von dem zweiten Steuerelement (35, 38) getrennt ist.

14. System nach den Ansprüchen 11 bis 13,
**dadurch gekennzeichnet, dass** die Zeigersteuervorrichtung (40), das rotatorisch betätigte manuelle dritte Steuerelement (41) und das translatorische manuelle vierte Steuerelement (42) auf einem Steuergerät (44) angeordnet sind, wobei das Steuergerät (44) vom Steuerbildschirm (23), dem ersten Steuerelement (25) und dem zweiten Steuerelement (35) getrennt ist.

15. System nach einem der Ansprüche 6 bis 14,
**dadurch gekennzeichnet, dass** das System (50, 52) einen zusätzlichen Steuerbildschirm (43, 123) zum Anzeigen der mindestens zwei Flugparameter des Luftfahrzeugs (6) aufweist, wobei der zusätzliche Steuerbildschirm (43, 123) es mindestens einem anderen Piloten des Luftfahrzeugs (6) ermöglicht, den von dem mindestens einen Piloten ausgewählten, durch den Autopiloten zu steuernden Flugparameter (10) und den von dem mindestens einen Piloten geänderten Sollwert des durch den Autopiloten (10) zu steuernden Flugparameters zu sehen.

16. Luftfahrzeug (6) mit einem Steuerungssystem (50, 51, 52) zum Steuern eines Autopiloten (10) des Luftfahrzeugs (6) nach einem der Ansprüche 6 bis 15,
**dadurch gekennzeichnet, dass** das erste Steuerelement (25, 28) und/oder das zweite Steuerelement (35, 38) betrieben wird, um mindestens ein anderes Verfahren zu implementieren, das von dem Verfahren zum Steuern (1) eines Autopiloten (10) eines Luftfahrzeugs (6) nach den Ansprüchen 1 bis 5 verschieden ist, wobei das mindestens eine weitere Verfahren aus der Gruppe ausgewählt ist, die aus einem Verfahren zum Einstellen eines atmosphärischen Referenzdrucks (QNH) und einem Verfahren zum Einstellen von Funkkommunikationsmitteln zum Ändern einer Frequenz eines Funkkommunikationssignals und/oder einer Lautstärke des Funkkommunikationssignals besteht.

## Claims

1. Method of controlling (1) an aircraft (6) autopilot (10), the method (1) comprising a succession of steps comprising at least:
• a selection step (2) for selecting a flight parameter to be servo-controlled by the autopilot (10),
• a modification step (3) for modifying a setpoint of the flight parameter to be servo-controlled by the autopilot (10), the modification step (3) being performed by the at least one pilot of the aircraft (6) by turning a first manually operated rotatable control element (25, 28), the first control element (25, 28) having a degree of rotational mobility relative to a fixed frame (26) about an axis of rotation (27), and
• a mode engagement step (4) for engaging the autopilot (10) in a mode corresponding to the modified setpoint at the modification step (3) of the flight parameter, the mode engaging step (4) being carried out by the at least one pilot of the aircraft (6) by pressing on a second manually operated translatable control element (35, 38), the second control element (35, 38) having a degree of translational mobility with respect to the fixed frame (26) along an axis of translation (37) between an initial rest position and an activated engagement position,
**characterised in that** the selection step (2) is at least performed by at least one pilot of the aircraft (6) by touching a touch zone (20) arranged on a touch surface (21) of a control screen (23) bringing about a display of at least two flight parameters of the aircraft (6), **in that** the modification step (3) is performed by means of the first control element (25, 28) arranged in close proximity to the control screen (23) by rotating the first control element (25, 28) with respect to the fixed frame (26) about the axis of rotation (27) arranged perpendicular to the control screen (23) and **in that** the mode engagement step (4) is performed by pressing the second control element (35, 38) cooperating with elastic return means (30) allowing the second control element (35, 38) to return to the initial rest position once the at least one pilot of the aircraft (6) ceases pressing.

2. Method according to claim 1, **characterised in that** the selection step (2) for selecting a flight parameter to be servo-controlled by the autopilot (10) is performed by at least one pilot of the aircraft (6) by touching the touch zone (20) arranged on the touch surface (21) and independently by operating a pointer control device (40) to move a pointer on the control screen (23), the pointer control device (40) being separate from the control screen (23).

3. Method according to either of claims 1 to 2, **characterised in that** the modification step (3) for modifying a setpoint of the flight parameter to be servo-controlled by the autopilot (10) is performed by the at least one pilot of the aircraft (6) by rotating the first manually operated rotatable control element (25, 35) and independently by rotating a third manually operated rotatable control element (41, 128), the third control element (41, 128) being separate from the first control element (25, 28).

4. Method according to any one of claims 1 to 3, **characterised in that** the mode-engaging step (4) for engaging the autopilot (10) in the mode corresponding to the modified setpoint at the step of modifying (3) the flight parameter is performed by at least one pilot of the aircraft (6) by pressing on the second manually translatable control element(35, 38) and independently by pressing a fourth manually translatable control element (42, 138), the fourth control element (42, 138) being separate from the second control element (35, 38).

5. Method according to any one of claims 1 to 4, **characterised in that** the method (1) comprises an auxiliary display step (5) for displaying the at least two flight parameters of the aircraft (6) on an additional control screen (43, 123), the auxiliary display step (5) allowing at least one other pilot of the aircraft (6) to simultaneously display on the additional control screen (43, 123) the selection step (2) and the modification step (3) performed by the at least one pilot and displayed on the control screen (23).

6. Control system (50, 51, 52) of an aircraft (6) autopilot (10) for carrying out a method (1) according to any one of claims 1 to 5, the system (50, 51, 52) comprising at least:
• a control screen (23) performing a display of at least two flight parameters of the aircraft (6), the control screen (23) comprising a touch surface (21);
• a first control element (25, 28) enabling the at least one pilot to modify a setpoint of the flight parameter to be servo-controlled by the autopilot (10), the first control element (25, 28) being of a manually operated rotatable type, the first control element (25, 28) having a degree of rotational mobility relative to a fixed frame (26) about an axis of rotation (27); and
• a second control element (35, 38) for engaging the automatic pilot (10) in a mode corresponding to the modified setpoint by means of the first control element (25, 28), the second control element (35, 38) being of the manually-operated translatable type, the second control element (35, 38) having a degree of mobility in translation relative to the fixed frame (26) along an axis of translation (37) between an initial rest position and an activated engagement position,
**characterised in that** the touch surface (21) of the control screen (23) allows at least one pilot to select the flight parameter to be servo-controlled by the autopilot (10), **in that** the first control element (25, 28) is arranged in the immediate vicinity of the control screen (23), the axis of rotation (27) of the degree of rotational mobility of the first control element (25, 28) relative to the fixed frame (26) being arranged perpendicularly to the control screen (23) and **in that** the second control element (35, 38) cooperates with elastic return means (30) enabling the second control element (35, 38) to return to the initial rest position once the at least one pilot of the aircraft (6) ceases pressing.

7. System according to claim 6,**characterised in that** the second control element (35, 38) is arranged in close proximity to the control screen (23), the axis of translation (37) being arranged perpendicularly to the control screen (23).

8. System according to any one of claims 6 to 7, **characterised in that** the axis of rotation (27) of the first control element (28) is arranged coaxially with the translation axis (37) of the second control element (38).

9. System according to claim 8, **characterised in that** the first control element (28) and the second control element (38) form a monolithic assembly (39).

10. System according to any one of claims 6 to 9, **characterised in that** the first control element (28) comprises at least two knobs (31, 32) arranged coaxially which can be independently rotationally moved relative to the axis of rotation (27), a first knob (31) allowing modification of the setpoint of the flight parameter to be servo-controlled by the autopilot (10) with a first increment value between two consecutive values of the setpoint and a second knob (32) allowing modification of the setpoint of the flight parameter to be servo-controlled by the autopilot (10) with a second increment value between two other consecutive values of the setpoint, the first increment value being different from the second increment value.

11. System according to any one of claims 6 to 10, **characterised in that** the system (50, 51, 52) comprises a pointer control device (40) for moving a pointer on the control screen (23), the pointer control device (40) being separate from the control screen (23).

12. System according to any one of claims 6 to 11, **characterised in that** the system (50, 52) comprises a third manually operated rotatable control element (41, 128), the third control element (41, 128) being separate from the first control element (25, 28).

13. System according to any one of claims 6 to 12, **characterised in that** the system (50, 52) comprises a fourth manually operated translational control element (42, 138), the fourth control element (42, 138) being separate from the second control element (35, 38).

14. System according to claims 11 to 13, **characterised in that** the pointer control device (40), the third manually operated rotatable control element (41) and the fourth manually operated translational control element (42) are arranged on a control box (44), the control box (44) being separate simultaneously from the control screen (23), the first control element (25) and the second control element (35) .

15. System according to any one of claims 6 to 14, **characterised in that** the system (50, 52) comprises an additional control screen (43, 123) for displaying the at least two flight parameters of the aircraft (6), the additional control screen (43, 123) enabling at least one other pilot of the aircraft (6) to display the flight parameter to be servo-controlled by the autopilot (10) which is selected by the at least one pilot and the setpoint of the flight parameter to be servo-controlled by the autopilot (10) which is modified by the at least one pilot.

16. Aircraft (6) having a control system (50, 51, 52) for an aircraft (6) autopilot (10) according to any one of claims 6 to 15, **characterised in that** the first control element (25, 28) and/or the second control element (35, 38) is/are operated to implement at least one other method different from the control method (1) of an aircraft (6) autopilot (10) according to claims 1 to 5, the at least one other method being selected from the group consisting of a method of adjusting a reference atmospheric pressure (QNH) and a method of adjusting radio communication means allowing modification of a frequency of a radio communication signal and/or a sound volume of the radio communication signal.
